# EUROPÄISCHE PATENTSCHRIFT

(11) **EP 2 159 603 B1**
(45) Veröffentlichungstag und Bekanntmachung des Hinweises auf die Patenterteilung: **09.11.2011**
(21) Anmeldenummer: 08015426.3
(22) Anmeldetag: 01.09.2008
(51) Int. Cl.: G01S 17/48

(54) **Objektfeststellungsverfahren und Objektfeststellungssensor**
Method and sensor for identifying objects
Procédé de détection d'objets et capteur de détection d'objets

(43) Veröffentlichungstag der Anmeldung: 03.03.2010
(73) Patentinhaber: SICK AG, 79183 Waldkirch/Breisgau (DE)
(72) Erfinder: Waslowski, Kai, 79312 Emmendingen (DE); Merettig, Gerhard, 79350 Sexau (DE); Auer, Patrick, 79106 Freiburg (DE)
(74) Vertreter: Manitz, Finsterwald & Partner GbR

(56) Entgegenhaltungen:
- EP-A- 1 118 208
- DE-A1-102006 029 025
- US-A- 4 208 125
- US-A1- 2004 233 416

## Beschreibung

Die Erfindung betrifft ein Objektfeststellungsverfahren zur Feststellung, ob sich ein Objekt innerhalb eines Überwachungsbereiches befindet, der zumindest auf einer Seite durch einen wählbaren Schaltabstand begrenzt ist, bei dem ein Lichtpuls einer vorbestimmten Pulsdauer in den Überwachungsbereich geschickt wird und der gegebenenfalls an einem Objekt reflektierte Lichtpuls mit zumindest einer Zeile von fotosensitiven Elementen detektiert wird. Die Erfindung betrifft weiterhin einen Objektfeststellungssensor zur Durchführung eines solchen Verfahrens.

Sensoren zur Bestimmung der Entfernung von Objekten in einem Überwachungsbereich setzen zum Beispiel optische Triangulationsverfahren ein, bei denen eine Lichtquelle zum Aussenden von sichtbarem oder unsichtbarem Licht in den Überwachungsbereich, ein zeilen- oder matrixförmiges Empfängerarray, sowie eine Sende- und Empfangsoptik verwendet werden. Triangulationslichttaster sind zum Beispiel in DE 197 21 105 A1, DE 199 62 701 A1, DE 101 31 685 A1, DE 102 31 178 A1, DE 198 50 270 A1 oder EP 1 801 618 A2 beschrieben.

In Abhängigkeit der Entfernung zwischen Sensor und reflektierendem Objekt ändert sich die Position des detektierten Lichts auf dem Detektor. Zwischen dem Auftreffpunkt und dem Detektor und der Entfernung des erfassten Objekts besteht ein geometrischer Zusammenhang. Auswertung der Lichtverteilung auf dem Empfängerarray, zum Beispiel durch Auswertung der Lage des Lichtschwerpunkts, kann daher eingesetzt werden, um zu bestimmen, ob sich ein Objekt in einem vorbestimmten Überwachungsbereich befindet.

Bei einem Triangulationslichttaster folgt die Position P eines Lichtflecks näherungsweise der Beziehung P(x) = f · b / x mit f: Brennweite, b: Basisabstand, d.h. Abstand der Sende- und Empfangsoptik, und x: Entfernung des Objekts. Die Auflösung für eine bestimmte Entfernung x, d.h. die Ableitung dP(x) / dx ist proportional zu 1 / x². Je größer die Entfernung ist, desto geringer ist dementsprechend die Auflösung eines Triangulationslichttasters.

Optische Lichttaster auf Lichtlaufzeitbasis zur Detektion von Objekten in einem Überwachungsbereich ermitteln die Entfernung zwischen Sensor und Objekt aus der Zeit, die das Licht für den Weg von der Lichtquelle zu einem Objekt und nach Reflexion am Objekt zurück zum Empfänger benötigt (time-of-flight-Verfahren, TOF-Verfahren). Dabei werden oftmals Laserdioden als Lichtquelle eingesetzt und das ausgesendete Licht wird pulsförmig oder sinusförmig moduliert.

Das time-of-flight (TOF)-Verfahren basiert darauf, dass sich Entfernungen messen lassen, indem beispielsweise die Laufzeit eines gepulsten oder kontinuierlichen modulierten Lichts von einer geeigneten Lichtquelle über das zu detektierende Reflexionsobjekt zum Detektor gemessen wird. Die Lichtquelle emittiert dabei zum Beispiel gepulstes oder kontinuierlich moduliertes Licht, wobei gleichzeitig eine sehr genaue Uhr gestartet wird. Der Lichtpuls trifft auf das reflektierende Objekt und wird später vom Empfänger detektiert. Die distanzabhängige Signallaufzeit des Lichts kann so gemessen werden und liefert unmittelbar die gesuchte Entfernung.

Die Auflösung von TOF-Lichttastern hängt von der zeitlichen Auflösung ab, mit der die Laufzeit eines ausgesendeten und empfangenen Lichtpulses ausgemessen werden kann. Die Auflösung ist im Gegensatz zu Triangulationsmessungen aber in der Regel im Wesentlichen unabhängig von der Entfernung und im gesamten Messbereich gleich.

Bei einer Lichtgeschwindigkeit von ca. 3 · 10⁸ m/s ergibt sich eine Lichtlaufzeit von ca. 33 ps/cm. Durch Hin- und Rückweg eines reflektierten Lichtpulses ergibt sich daraus eine Verzögerung von ca. 66 ps/cm. Bei einer gewünschten Entfernungsauflösung von 1 cm folgt daraus eine notwendige zeitliche Auflösung der Lichtlaufzeitmessung von ca. 66 ps. Um die Lichtlaufzeit zum Beispiel über einen digitalen Zähler mit der gewünschten Auflösung zu bestimmen, sind Systemtaktraten von zum Beispiel 15 GHz notwendig. Die Stromaufnahme einer digitalen Schaltung ist linear vom Systemtakt abhängig.

Ein Entfernungsmesssystem, das eine Triangulationsmessung und eine TOF-Messung kombiniert, ist in DE 10 2004 042 466 A1 beschrieben. In US 2004/0233416 A1 sind ein Verfahren und eine Vorrichtung zur Aufnahme von dreidimensionalen, distanzmessenden Bildern beschrieben, wobei eine Serie von TOF-Messungen durchgeführt wird.

In DE 10 2004 037 137 A1 ist ein Entfernungsmessverfahren angegeben, bei dem der Abstand eines Objektes durch laufzeitsensitive Detektion intensitätsmodulierter Strahlung bestimmt wird, die zu einem Objekt gesendet und von diesem reflektiert wird. Da bei dieser vorbekannten Anordnung zum Beispiel eine periodische Abfolge von Pulsen verwendet wird, ist die TOF-Messung in der Regel mit einer Mehrdeutigkeit verbunden. Um diese Mehrdeutigkeit zu überwinden, wird in DE 10 2004 037 137 A1 vorgeschlagen, zusätzlich zu der TOF-Messung eine weitere Entfernungsmessung, zum Beispiel eine Triangulationsmessung oder eine interferometrische Messung, vorzunehmen oder zum Beispiel die Triangulation für eine genauere Auflösung im Nahbereich und das TOF-Verfahren für größere Entfernungen zu nutzen. Dazu ist ein Feld von TOF-Detektoren vorgesehen, mit denen nicht nur die Lichtlaufzeit ausgemessen werden kann, sondern zusätzlich auch noch eine Triangulationsmessung vorgenommen werden kann.

WO 2007/025398 A1 beschreibt ein Verfahren, bei dem ein Sendelichtbündel zu einem Objekt gesendet wird und das von diesem Objekt reflektierte Licht auf seine Phasenverschiebung hin untersucht wird. In Abhängigkeit des Abstandes zwischen Sensor und Objektoberfläche wird ein Lichtfleck in unterschiedlicher Weise auf eine Anordnung aus zwei oder mehreren fotoelektrischen Elementen abgebildet. Gemäß WO 2007/025398 A1 wird aus der so ermittelten ungefähren Lage des abgebildeten Lichtflecks die Periode der Modulationsfrequenz ermittelt, mit der das Sendelicht in Richtung des Objektes geschickt wurde. Die Phasenlage des Lichtes innerhalb einer so ermittelten Periode wird bestimmt, um daraus Information über die Entfernung eines Objektes zu erhalten.

Für einen Objektfeststellungssensor ist es ausreichend, wenn ein Signal generiert wird, das Information darüber zulässt, ob in einem Überwachungsbereich ein Objekt vorhanden ist oder nicht. Der Überwachungsbereich wird zum Beispiel durch einen Schaltabstand definiert. Befindet sich ein Objekt zum Beispiel näher als dieser Schaltabstand am Sensor, so wird ein positives Objektfeststellungssignal ausgegeben, in anderen Fällen ein negatives.

Aufgabe der vorliegenden Erfindung ist es, ein Verfahren und eine Vorrichtung anzugeben, mit denen für unterschiedliche Schaltabstände eine möglichst genaue Angabe über die Anwesenheit oder Nichtanwesenheit eines Objektes in einem Überwachungsbereich möglich ist.

Diese Aufgabe wird mit einem Objektfeststellungsverfahren mit den Merkmalen des Anspruches 1 bzw. einem Objektfeststellungssensor mit den Merkmalen des Anspruches 13 gelöst. Unteransprüche sind auf bevorzugte Ausgestaltungen gerichtet.

Bei einem erfindungsgemäßen Objektfeststellungsverfahren wird ein Puls sichtbaren oder unsichtbaren Lichts einer vorbestimmten Pulsdauer in den Überwachungsbereich geschickt. Der gegebenenfalls an einem Objekt reflektierte Lichtpuls wird mit zumindest einer Zeile von fotosensitiven Elementen detektiert. Es können auch mehrere Zeilen vorgesehen sein, um eine Matrix von fotosensitiven Elementen zu bilden.

Zumindest für ein solches fotosensitives Element, das einen reflektierten Lichtpuls empfängt, wenn ein Objekt sich etwa in dem gewählten Schaltabstand befindet, wird das detektierte Signal über ein zeitliches Integrationsfenster integriert, das zwei zeitlich aufeinander folgende Unterintegrationsfenster umfasst.

Das Integrationsfenster wird in einem der Messung vorgeschalteten Einlernschritt so festgelegt, dass es zeitlich länger als die Pulsdauer eines in den Überwachungsbereich gesendeten Lichtpulses ist, so dass sicher gestellt ist, dass mit dem gewählten Integrationsfenster ein Lichtpuls vollständig integriert werden kann. Außerdem wird das Integrationsfenster so festgelegt, dass ein Lichtpuls, der an einem Objekt reflektiert wird und von dem betrachteten fotosensitiven Element empfangen wird, zeitlich vollständig in dem Integrationsfenster liegt.

Das Integrationsfenster des erfindungsgemäßen Objektfeststellungsverfahrens wird in Unterintegrationsfenster aufgeteilt, deren Grenze in besonderer Weise gewählt wird. Wenn ein fotosensitives Element betrachtet wird, das einen Empfangslichtpuls empfängt, wenn sich ein Objekt weit von dem Sensor weg befindet - also in einem Fernbereich - so wird die Grenze zwischen den Unterintegrationsfenstern an einen Zeitpunkt gelegt, der der Summe aus der erwarteten Lichtpulslaufzeit und der halben Lichtpulsdauer entspricht.

Der Begriff Fernbereich wird dabei verwendet, um zu kennzeichnen, dass eine Verschiebung des Objektes von dem Sensor weg oder zum Sensor hin nur eine sehr kleine Änderung der Lage des empfangenen Lichtpulses auf der Zeile von fotosensitiven Elementen bewirkt. Der Fernbereich entspricht also demjenigen Bereich, in dem ein konventionelles Triangulationstastverfahren nur eine sehr geringe Dynamik aufweist. Welche der fotosensitiven Elemente diesem Fernbereich zugeordnet werden und dementsprechend die Grenze zwischen den Unterintegrationsfenstern für die Auswertung eines Signals eines entsprechenden fotosensitiven Elementes wie beschrieben gewählt wird, kann vor der Messung zum Beispiel ebenfalls in dem Einlernschritt je nach der gewünschten Genauigkeit und Signaldynamik benutzerseitig festgelegt werden.

Beispielsweise kann der Fernbereich einen Bereich umfassen, der weiter als 0,5 m von der Zeile der fotosensitiven Elemente oder der entsprechenden Empfangsoptik entfernt ist. Der Nahbereich umfasst dann den Bereich mit kürzerem Abstand als 0,5 m von den fotosensitiven Elementen oder der entsprechenden Empfangsoptik.

Eine solche Auswahl der Unterintegrationsfenster bewirkt, dass ein reflektierter Lichtpuls zeitlich zur Hälfte in dem ersten Unterintegrationsfenster und zur anderen Hälfte in dem zweiten Unterintegrationsfenster liegt. Das erfindungsgemäße Verfahren sieht weiterhin vor, dass das über das erste Unterintegrationsfenster aufintegrierte Signal und das über das zweite Unterintegrationsfenster aufintegrierte Signal mit einem ersten bzw. einem zweiten Unterintegrationsfensterfaktor multipliziert und zu einem Summenintegrationssignal addiert werden. Diese Gewichtung wird dabei derart vorgenommen, dass der erste Unterintegrationsfensterfaktor und der zweite Unterintegrationsfensterfaktor so gewählt werden, dass das Produkt aus dem ersten Unterintegrationsfensterfaktor und der zeitlichen Länge des ersten Unterintegrationsfensters gleich dem negativen Produkt des zweiten Unterintegrationsfensterfaktors und der zeitlichen Länge des zweiten Unterintegrationsfensters ist.

Befindet sich dementsprechend ein reflektierendes Objekt an einer Stelle im Überwachungsbereich, die zu einem reflektierten Lichtpuls auf dem betrachteten fotosensitiven Element führt, so wird durch das erfindungsgemäße Verfahren sicher gestellt, dass das Summenintegrationssignal gerade Null ist.

Handelt es sich bei dem betrachteten fotosensitiven Element um dasjenige fotosensitive Element, das einen reflektierten Lichtpuls empfängt, wenn sich ein Objekt gerade im Schaltabstand befindet, so kann dementsprechend anhand des Summenintegrationssignales entschieden werden, ob sich ein Objekt genau im Schaltabstand befindet. Befindet sich ein Objekt näher als der Schaltabstand am Sensor, so benötigt der Lichtpuls von der Sendeeinrichtung zum reflektierenden Objekt und wieder zurück eine kürzere Zeit als die erwartete Lichtpulslaufzeit. Der Lichtpuls ist dann nicht mehr symmetrisch um die Grenze zwischen den zwei zeitlichen Unterintegrationsfenstern angeordnet, so dass das Summenintegrationssignal ungleich Null ist. Dasselbe gilt für ein Objekt, das weiter als der Schaltabstand von dem Sensor entfernt ist, da hier die Lichtlaufzeit länger als die erwartete Lichtpulslaufzeit ist. Da die Unterintegrationsfensterfaktoren unterschiedliches Vorzeichen haben, kann aus dem Summenintegrationssignal auf die Lage des Objektes innerhalb oder außerhalb des Überwachungsbereiches geschlossen werden, der durch den Schaltabstand definiert wird.

Nicht-modulierte Störsignale, wie zum Beispiel Sonnenlicht, werden durch die Integration über die Unterintegrationsfenster, die mit Faktoren unterschiedlichen Vorzeichens behandelt werden, wirksam unterdrückt.

Durch die Verwendung eines zeitlich begrenzten Lichtpulses werden auch andere Störeinflüsse, zum Beispiel von sinusförmig modulierten Lichtquellen (zum Beispiel Energiesparlampen) oder Fremdlichtschranken, unterdrückt.

Je nach gewünschter Genauigkeit können die aufintegrierten Signale des ersten bzw. des zweiten Unterintegrationsfensters direkt ausgewertet werden. Es können aber auch zunächst mehrere Sendelichtpulse ausgesendet werden und die resultierenden Empfangslichtpulse an den einzelnen Unterintegrationsfenstern aufaddiert werden. Dies kann zum Beispiel bei dunklen Objekten oder großen Tastweiten sinnvoll sein. Dabei können die mehreren Sendepulse auch in pseudo-zufälligen zeitlichen Mustern ausgesendet werden, so dass eine wirkungsvolle Unterdrückung von Gleichstromlichtsignalen oder sinusförmigen Störsignalen erreicht wird.

Prinzipiell kann durch geeignete Wahl der Unterintegrationsfensterfaktoren der erfindungsgemäße Effekt erreicht werden, auch wenn die Unterintegrationsfenster unterschiedlich lang sind. Eine einfache Ausgestaltung sieht jedoch vor, dass das erste und das zweite Unterintegrationsfenster gleich lang sind und der zweite Unterintegrationsfensterfaktor dem negativen Wert des ersten Unterintegrationsfensterfaktors entspricht. Einfacherweise kann vorgesehen sein, dass dabei sowohl der erste als auch der zweite Unterintegrationsfaktor den Betrag 1 haben.

Wenn ein fotosensitives Element betrachtet wird, das einen reflektierten Lichtpuls empfängt, wenn sich ein Objekt in einem zuvor festgelegten Nahbereich befindet, kann das Integrationsfenster in dem vorgeschalteten Einlernschritt für dieses fotosensitive Element so festgelegt werden, dass ein reflektierter Lichtpuls vollständig in einem der beiden Unterintegrationsfenster liegt. Nachdem zwischen dem Auftreffpunkt des reflektierten Lichtpulses auf der Zeile der fotosensitiven Elemente und dem Abstand des reflektierenden Objektes nach dem Triangulationsprinzip eine eindeutige geometrische Beziehung herrscht, ist es grundsätzlich möglich zu entscheiden, ob sich ein reflektierendes Objekt vor oder hinter einem gewählten Schaltabstand befindet, um zu entscheiden, ob ein positives oder negatives Objektfeststellungssignal ausgegeben werden soll. Diese Art der Auswertung eignet sich besonders für solche fotosensitiven Elemente, die reflektiertes Licht aus einem Nahbereich empfangen, der sich dadurch auszeichnet, dass eine Verschiebung des Objektes zu dem Sensor hin oder von dem Sensor weg zu einer ausreichend großen Verschiebung des reflektierten Lichtes auf der Zeile der fotosensitiven Elemente führt. Wie weit ein Nahbereich ausgedehnt werden kann, in dem diese vereinfachte Auswertung verwendet wird, kann ebenfalls in dem vorherigen Einlernschritt in Abhängigkeit der gewünschten Signaldynamik festgelegt werden. Der Nahbereich schließt sich in Richtung des Sensors an den gewählten Fernbereich an.

Um eine größere Sicherheit gegenüber Störlichtquellen, insbesondere Gleichstromstörlichtquellen, zu erreichen, kann allerdings auch im Nahbereich eine Auswertung stattfinden, wie sie oben für den Fernbereich beschrieben ist, wobei die zeitliche Grenze zwischen den zwei Unterintegrationsfenstern an einen Zeitpunkt gelegt wird, der der Summe aus der erwarteten Lichtpulslaufzeit und der halben Lichtpulslänge entspricht.

Die Summenintegrationssignale für die einzelnen fotosensitiven Elemente können direkt mit einem oder mehreren individuellen, vorbestimmten Referenzwerten verglichen werden, um Information über das Vorhandensein oder Nichtvorhandensein eines Objektes zu erhalten. Bei einer anderen Ausgestaltung des erfindungsgemäßen Verfahrens wird das Summenintegrationssignal für jedes einzelne fotosensitive Element mit einem individuellen vorher festgelegten Elementmultiplikationsfaktor gewichtet. Die so multiplizierten Signale werden addiert und die resultierende Summe mit einem vorbestimmten Summenreferenzwert verglichen, um Information über die Anwesenheit oder Nichtanwesenheit eines Objektes im Überwachungsbereich zu erhalten.

Eine besonders vorteilhafte Weiterbildung dieser Ausgestaltung sieht vor, dass der Elementmultiplikationsfaktor für Signale von fotosensitiven Elementen, auf die der reflektierte Lichtpuls fällt, wenn sich das Objekt näher als der gewählte Schaltabstand zum Sensor befindet, einen ersten Wert a hat und der Elementmultiplikationsfaktor für Signale von fotosensitiven Elementen, auf die der reflektierte Lichtpuls fällt, wenn sich das Objekt weiter weg als der gewählte Schaltabstand befindet, einen zweiten Wert b hat, wobei b dem Negativen des Wertes a entspricht. Für Signale von fotosensitiven Elementen, auf die der reflektierte Lichtpuls fällt, wenn sich das reflektierende Objekt im Grenzbereich vor oder hinter oder an dem Schaltabstand befindet, wird ein Elementmultiplikationsfaktor c gewählt, der zwischen a und b liegt. Der Grenzbereich kann zum Beispiel einem fotosensitiven Element entsprechen. Eine einfache Ausgestaltung sieht vor, dass der Betrag der Elementmultiplikationsfaktoren a und b gleich 1 ist. Fotosensitive Elemente, die nur dann reflektierte Lichtpulse enthalten, wenn das reflektierende Objekt außerhalb eines gewünschten Sichtbereiches liegt, können einen Elementmultiplikationsfaktor gleich Null erhalten. Welche fotosensitiven Elemente den Bereichen vor, hinter oder am gewählten Schaltabstand entsprechen sollen, kann in einem vorgeschalteten Einlernschritt bestimmt werden, bzw. die Faktoren werden entsprechend gewählt, um den Schaltabstand festzulegen.

Grundsätzlich kann jedem fotosensitiven Element bei der Durchführung des Objektfeststellungsverfahrens eine eigene Auswerteschaltung zugeordnet werden, die insbesondere die Integrations-, die Multiplikations- und die Additionsschritte des erfindungsgemäßen Verfahrens durchführt. Eine besonders wirtschaftliche Ausgestaltung sieht jedoch vor, dass eine Anzahl Auswerteschaltungen verwendet wird, die kleiner ist als die Anzahl der fotosensitiven Elemente und zur Auswertung der einzelnen fotosensitiven Elemente diese jeweils über eine Schaltermatrix mit einer der Auswerteschaltungen verbunden werden.

Ein erfindungsgemäßer Objektfeststellungssensor weist eine Lichtquelle zur Aussendung von Lichtpulsen in den Überwachungsbereich auf. Zumindest eine Zeile von fotosensitiven Elementen ist zum Empfang von aus dem Überwachungsbereich reflektierten Lichtpulsen vorgesehen. Schließlich weist ein erfindungsgemäßer Objektfeststellungssensor eine Auswerteeinheit auf, die zur Auswertung der Ausgangssignale der fotosensitiven Elemente dient und die derart ausgestaltet ist, dass sie insbesondere die Integrations-, Multiplikations- und Additionsschritte des erfindungsgemäßen Verfahrens durchführen kann.

Grundsätzlich kann die Auswerteeinheit eine Anzahl von Auswerteschaltungen umfassen, die der Anzahl von fotosensitiven Elementen entspricht. Eine kostengünstige Ausgestaltung sieht vor, dass die Anzahl der Auswerteschaltungen kleiner ist als die Anzahl der fotosensitiven Elemente und der Objektfeststellungssensor über eine Schaltermatrix verfügt, die eine wechselbare Verbindung der fotosensitiven Elemente mit einer der Auswerteschaltungen umfasst.

Vorteilhafterweise sind die Fotodioden und die Auswerteeinheit auf einem gemeinsamen Substrat vorgesehen, wodurch eine einfache Herstellung und kompakte Ausgestaltung möglich ist.

Andere vorteilhafte Ausführungsformen des erfindungsgemäßen Objektfeststellungssensors und deren Vorteile ergeben sich in analoger Weise aus der obigen Schilderung vorteilhafter Ausgestaltungen des erfindungsgemäßen Objektfeststellungsverfahrens und deren Vorteilen.

Die Erfindung wird anhand der beiliegenden Figuren im Detail erläutert, die beispielhaft Ausgestaltungen des erfindungsgemäßen Objektfeststellungssensors bzw. Objektfeststellungsverfahrens darstellen. Dabei zeigen:
- Fig. 1: in seitlicher und schematischer Ansicht den Aufbau eines erfindungsgemäßen Objektfeststellungssensors,
- Fig. 2: den schematischen Aufbau einer für ein erfindungsgemäßes Objektfeststellungsverfahren verwendbaren Auswerteschal- tung und
- Fig. 3: zeitliche Diagramme von Lichtpulsen und Integrationsfenstern zur Erläuterung eines erfindungsgemäßen Verfahrens.

In dem Gehäuse 10 des Objektfeststellungssensors 300 ist ein Lichtsender 12 angeordnet. Es kann sich dabei zum Beispiel um eine Laserdiode im sichtbaren, infraroten oder ultravioletten Bereich oder um eine schnelle Leuchtdiode im sichtbaren, infraroten oder ultravioletten Bereich mit einer Anstiegs- bzw. Abfallzeit von vorzugsweise kleiner als 2 Nanosekunden handeln. Die Lichtquelle dient zur Aussendung von Sendelichtpulsen 26 durch die Sendeoptik 14, die zum Beispiel durch eine entsprechend ausgestaltete Linse gebildet ist. Eine bei dieser Ausführungsform daneben angeordnete Linse bildet die Empfangsoptik 16, mit Hilfe derer Sendelicht, das zurück in den Objektfeststellungssensor 300 reflektiert wird, auf eine Lichtempfangseinheit 18 abgebildet wird, die bei der gezeigten Ausführungsform aus einer Zeile von fotosensitiven Elementen, insbesondere Fotodioden 20 besteht.

Die einzelnen Fotodioden 20 sind in noch zu beschreibender Weise mit einer nicht gezeigten Auswerteeinheit verbunden.

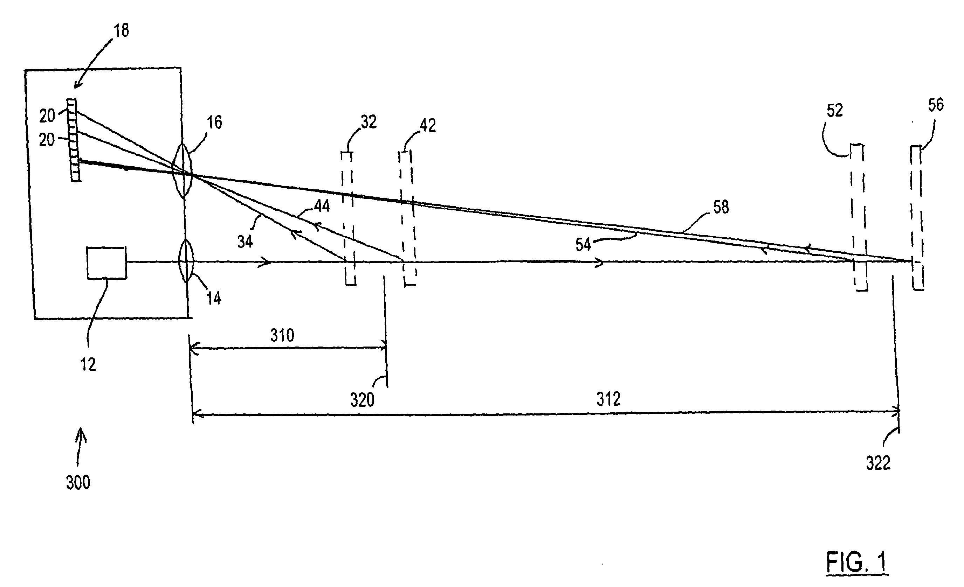

In Fig. 1 sind verschiedene Beispiele für die Auswahl eines Schaltabstandes bzw. eines damit definierten Überwachungsbereiches gezeigt. Zu einem kurzen Überwachungsbereich 310 gehört ein Schaltabstand 320. Zu einem größeren Überwachungsbereich 312 gehört ein Schaltabstand 322. Zu dem jeweils gewählten Schaltabstand gehört nach dem Triangulationsprinzip ein fester Punkt auf der Zeile 18 der Fotodioden 20.

Die Fotodioden 20 sind bei der gezeigten Ausführungsform untereinander gleich. Grundsätzlich ist es aber auch möglich, dass die einzelnen fotosensitiven Elemente zum Beispiel unterschiedliche Größe haben. So können die unterschiedlichen Dynamikbereiche ausgeglichen werden, die zwischen fotosensitiven Elementen auftreten, die für unterschiedliche Entfernungsbereiche zuständig sind.

Der Schaltabstand definiert sich hier derart, dass, wenn ein Objekt an einer Stelle detektiert wird, die näher am Objektfeststellungssensor 300 ist als der Schaltabstand, von der nicht gezeigten Auswerteeinheit ein positives Objektfeststellungssignal erzeugt wird. Wenn ein Objekt in einem Abstand detektiert wird, der größer ist als der Schaltabstand, so wird ein negatives Objektfeststellungssignal erzeugt.

Beispielhaft sind vier Objekte 32, 42, 52, 56 gezeigt, die in unterschiedlichen Entfernungen von dem Objektfeststellungssensor 300 angeordnet sind. Das Objekt 32 reflektiert Licht 34 durch die Empfangsoptik 16 auf die Zeile 18 der fotosensitiven Elemente. Das reflektierte Licht des Objektes 42 ist mit 44 bezeichnet, während reflektiertes Licht der weiter entfernten Objekte 52 bzw. 56 mit Bezugsziffern 54 bzw. 58 bezeichnet sind.

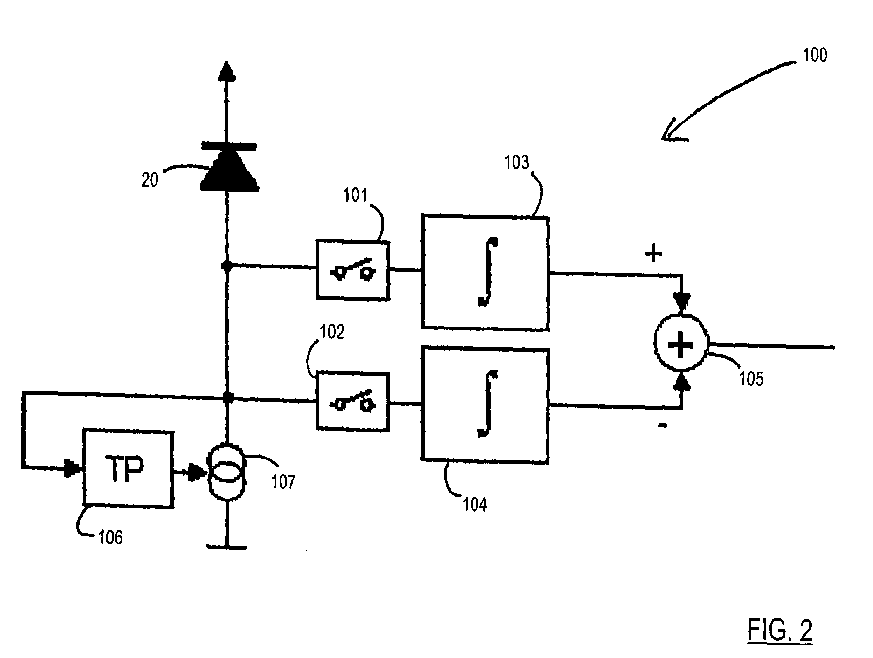

Die Fotodioden 20 sind in nicht gezeigter Weise mit einer Auswerteeinheit verbunden. In der Auswerteeinheit sind eine oder mehrere Auswerteschaltungen 100 vorgesehen. Eine solche Auswerteschaltung 100 ist Gegenstand der Fig. 2. Eine Fotodiode 20 ist über Schalter 101, 102 mit Integratoren 103, 104 verbunden. Das Ausgangssignal des Integrators 103 wird positiv genommen und das Ausgangssignal des Integrators 104 wird negativ genommen und im Addierer 105 zusammengezählt. Eine nicht gezeigte Steuerung dient zum Umschalten der Schalter 101 und 102, so dass das Signal der Fotodiode 20 entweder über den Integrator 103 oder über den Integrator 104 läuft. Je nachdem, welcher Schalter geschlossen ist, erreicht ein positives oder negatives Signal den Addierer. Mit den Schaltern 101, 102 lässt sich bei geeignet ausgewählter zeitlicher Umschaltung also ein Integrationsfenster mit Unterintegrationsfenstern definieren, von denen eines mit dem Faktor +1 und eines mit dem Faktor -1 weiterverarbeitet wird.

Optional kann die Auswerteschaltung der Fig. 2 noch einen Tiefpass 106 und eine Steuerstromquelle 107 aufweisen, um ein Gleichstromsignal der Fotodiode zu kompensieren und auf diese Weise die Signaldynamik weiter zu erhöhen.

Fig. 2 zeigt eine Ausgestaltung, bei der zu jeder Fotodiode 20 eine entsprechende Auswerteschaltung 100 mit Schaltern 101, 102, Integratoren 103, 104, Addierern 105 etc. vorgesehen ist. Alternativ können sich mehrere Fotodioden 20 eine Auswerteschaltung teilen, wenn eine entsprechende Schaltermatrix zwischengeschaltet ist, die mehrere Fotodioden variabel mit einer Auswerteschaltung verbindet.

Eine Ausgestaltung des erfindungsgemäßen Verfahrens wird wie folgt durchgeführt:

In einem Einlernschritt wird festgelegt, wo ein Schaltabstand liegen soll. Der Bereich mit kürzerem Abstand als dieser gewählte Schaltabstand 312, 322 zum Objektfeststellungssensor 300 definiert jeweils den Überwachungsbereich 310, 312. In Fig. 1 entspricht der Überwachungsbereich 310 dem Schaltabstand 320 und der Überwachungsbereich 312 dem Schaltabstand 322. Ist der Schaltabstand relativ groß, wie es schematisch in Fig. 1 durch den Schaltabstand 312 angedeutet sein soll, ist die Signaldynamik der Fotodiodenzeile 18 gering. Das bedeutet, dass eine Lageveränderung eines Objektes 52 nur eine geringe Änderung des Auftreffpunktes des Lichtes 54 auf der Fotodiodenzeile 18 bewirkt. Würde man nur aus der Lage des Auftreffpunktes des Lichtes 54 auf der Fotodiodenzeile 18 bestimmen wollen, ob sich ein Objekt 52 näher oder weiter als der Schaltabstand 322 von dem Objektfeststellungssensor 300 befindet, würde ein gegebenenfalls großer Fehler möglich sein. In Fig. 1 wird dies dadurch verdeutlicht, dass der Auftreffpunkt des reflektierten Lichtes 58 eines Objektes 56 außerhalb des Überwachungsbereiches 312 auf der Fotodiodenzeile 18 sich kaum vom Auftreffpunkt des reflektierten Lichtes 54 eines Objektes 52 innerhalb des Überwachungsbereiches 312 unterscheidet.

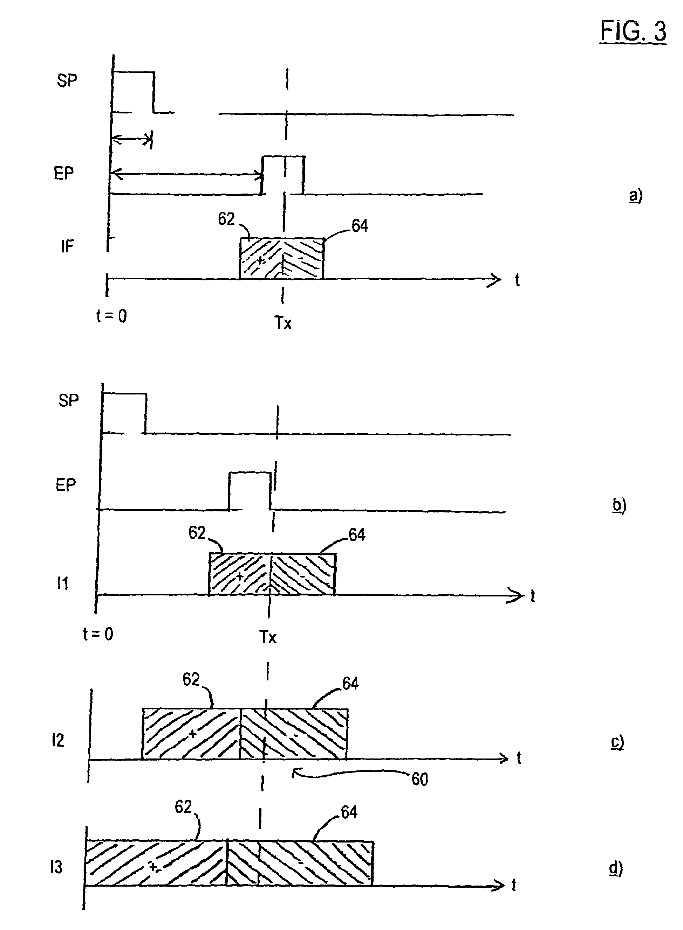

Insofern wird für derartig große Schaltabstände, zum Beispiel größer als 0,5 m, ein spezielles Auswerteverfahren eingesetzt, das mit Bezug zu Fig. 3 erläutert wird. In Fig. 3a ist auf der horizontalen Achse die Zeit abgetragen. Ein Sendelichtpuls SP der Länge Tw wird zu einem Zeitpunkt t = 0 ausgesendet. Ein möglicherweise vorhandenes Objekt 52 reflektiert den Sendelichtpuls und schickt ihn zurück durch die Empfangsoptik 16 auf die Fotodiodenzeile 18. Für eine Fotodiode 20 der Fotodiodenzeile 18, die von einem derart weit entfernten Objekt getroffen werden würde, wird eine Auswertung gemäß der Fig. 3a vorgenommen. Nach der erwarteten Lichtpulslaufzeit Tp, die der Summe der Lichtpulslaufzeit von dem Objektfeststellungssensor bis zu einem Objekt, das Licht auf die betrachtete Fotodiode reflektieren würde, und zurück entspricht, wird ein Empfangspuls EP erwartet. Aus der Pulslänge Tw und der erwarteten Pulslaufzeit Tp lässt sich eine Zeit Tx bestimmen, die der Summe der Pulslaufzeit Tp und der halben Pulsdauer Tw entspricht. Symmetrisch um diesen Zeitpunkt Tx wird ein Integrationsfenster IF gelegt, das aus zwei Unterintegrationsfenstern 62, 64 besteht, die in Fig. 3 mit "+" und "-" bezeichnet sind.

Die zeitlichen Positionen und Größen der Integrationsfenster bzw. Unterintegrationsfenster werden auf diese Weise in einem Einlernvorgang zumindest für diejenigen Fotodioden 20 festgelegt, die von einem Lichtempfangspuls beaufschlagt werden, der von einem Objekt im Schaltabstand reflektiert wird.

Die Zeit Tx entspricht in direkt verknüpfter Weise einer Entfernung von dem Objektfeststellungssensor 300 und definiert auf diese Weise einen Schaltabstand. Ein Objekt, das genau in dem Schaltabstand angeordnet ist, erzeugt einen Empfangspuls, wie er in der mittleren Figur der Fig. 3a gezeigt ist. Wird dieser Empfangspuls in dem Integrationsfenster IF integriert, wobei der Wert in dem ersten Unterintegrationsfenster 62 positiv genommen wird und der Wert in dem zweiten Unterintegrationsfenster 64 negativ genommen wird, so ergibt die als Summenintegrationssignal bezeichnete Summe gerade Null.

Befindet sich ein Objekt 52 etwas näher an dem Objektfeststellungssensor 300 als der Schaltabstand 322, wie es das Objekt 52 in Fig. 1 darstellt, wird die Pulslaufzeit Tp etwas kürzer sein und der Empfangspuls verschiebt sich stärker in das Unterintegrationsfenster 62. Das Summenintegrationssignal der Unterintegrationsfenster ist damit nicht mehr gleich Null. Ein Objekt, das etwas weiter entfernt ist als der Schaltabstand, erzeugt eine etwas längere Pulslaufzeit, so dass der Empfangspuls in Richtung des Unterintegrationsfensters 64 verschoben wird. Es ist also sehr genau feststellbar, ob sich ein Objekt 52, 54 innerhalb oder außerhalb des Überwachungsbereiches 312 befindet, auch wenn es sich in unmittelbarer Nähe des Schaltabstandes 322 befindet und dieser in einer größeren Entfernung von dem Objektfeststellungssensor 300 gewählt ist.

Für einen Schaltabstand 322 werden die Integrationsfenster I1, I2, I3, benachbarter fotosensitiver Elemente, die zu Entfernungen gehören, die etwas näher als der Schaltabstand 322 zum Objektfeststellungssensor 300 liegen, wie in der Fig. 3b gezeigt, gewählt.

Befindet sich ein Objekt in einem solchen Abstand, dass der Empfangspuls von einem fotosensitiven Element empfangen wird, das dem fotosensitiven Element benachbart ist, das zu dem Schaltabstand 312 gehört, wird zum Beispiel ein Integrationsfenster I1 gewählt. Da die Pulslaufzeit für ein Objekt kürzer ist, das von einem solchen benachbarten fotosensitiven Element empfangen wird, muss der Beginn der positiven Integrationszeit 62 früher erfolgen.

I2 und I3 sind entsprechende Integrationsfenster für fotosensitive Elemente 20 der Fotodiodenzeile 18, die Lichtpulse von solchen Objekten empfangen würden, die noch näher am Objektfeststellungssensor 300 sind. Die Umschaltungsgrenze von positiver auf negative Integration zwischen dem ersten und dem zweiten Unterintegrationsfenster 62, 64 kann dabei mit verschoben sein, wie es für I2 und I3 gezeigt ist.

Im Einlernvorgang werden die integrierten Werte, die zu den Unterintegrationsfenstern 62, 64 gehören, in den Addierern 105 der Auswerteeinheiten addiert, um so das Summenintegrationssignal zu ergeben. Jedes so entstandene Summenintegrationssignal kann mit einem Komparator gegen einen vorbestimmten Referenzwert getestet oder zum Beispiel über einen gemultiplexten Analog/ Digital-Wandler zur Weiterverarbeitung digitalisiert werden.

Die Integratoren 103 und 104 müssen nicht nach jedem empfangenen Lichtpuls ausgewertet werden. Speziell bei dunklen oder schwach reflektierenden Objekten oder großen Tastweiten kann es sinnvoll sein, mehrere Sendepulse auszusenden und die empfangenen Empfangspulse aufzuintegrieren. Der Abstand der einzelnen Sendepulse muss dabei nicht konstant gehalten werden, sondern kann mit pseudo-zufälligen Mustern variiert werden, wodurch zusätzlich der Einfluss von Störlicht zum Beispiel von Sonnenlicht, Gleichstromlichtquellen oder sinusförmigen Störern reduziert wird.

Die Signale der Fotodioden 20 werden bei einer besonderen Ausgestaltung mit einem Faktor multipliziert, der davon abhängig ist, ob die Fotodiode Empfangslicht empfängt, wenn ein reflektierendes Objekt vor, im oder hinter dem Schaltabstand angeordnet ist. Zum Beispiel wird für Fotodioden, die Licht von einem Objekt erhalten würden, das näher als der Schaltabstand am Objektfeststellungssensor 300 ist, ein Faktor a = 1 gewählt und für Licht, das von einem Objekt reflektiert wird, das weiter als der Schaltabstand von dem Objektfeststellungssensor 300 entfernt ist, ein Faktor b = -1. Für fotosensitive Elemente, die einem Objektabstand etwa in der Größenordnung des Schaltabstandes entsprechen, wird ein variabler Faktor zwischen -1 und +1 gewählt. Auf diese Weise ist es möglich, auch bei Lichtpulsen, die mehrere Fotodioden treffen, genau zu bestimmen, ob sich ein Objekt vor oder hinter dem Schaltabstand befindet.

Für Schaltabstände, die näher an dem Objektfeststellungssensor 300 liegen, wie der in Fig. 1 dargestellte Schaltabstand 320, können grundsätzlich die bisher beschriebenen Auswertemethoden verwendet werden. Für kürzere Schaltabstände lässt sich jedoch bereits aus der Information, welche Fotodiode 20 der Fotodiodenzeile 18 vom Empfangslichtpuls getrof fen wird, ausreichend Information erhalten, ob sich das reflektierende Objekt innerhalb des durch den Schaltabstand 320 definierten Überwachungsbereiches 310 befindet (wie das angedeutete Objekt 32) oder außerhalb des durch den Schaltabstand 320 definierten Überwachungsbereiches 310 (wie das angedeutete Objekte 42), da die örtliche Verschiebung des Empfangslichtpunktes auf der Fotodiodenzeile 18 bei kürzeren betrachteten Entfernungen relativ größer ist als bei größeren betrachteten Entfernungen. So sieht man in Fig. 1 zum Beispiel, dass das von den Objekten 32 bzw. 42 reflektierte Licht 34 bzw. 44 auf der Fotodiodenzeile 18 zwei Lichtpunkte in viel größerem Abstand erzeugt, als das von den Objekten 52 bzw. 56 reflektierte Licht 54 bzw. 58. In einem Nahbereich kann es also ausreichend sein, wenn allein aus der Position des Empfangslichtpulses auf der Fotodiodenzeile 18 darauf zurück geschlossen wird, ob sich ein Objekt im Überwachungsbereich oder außerhalb des Überwachungsbereiches befindet. Die Verwendung von einem negativ auszuwertenden Unterintegrationsfenster 62 und einem positiv auszuwertenden Unterintegrationsfenster 64 wird aber vorteilhafterweise beibehalten, um zum Beispiel nicht-modulierte Störsignale wirksam auszublenden. Die Verwendung einzelner Lichtpulse wird auch im Nahbereich vorteilhafterweise eingesetzt, um den Einfluss zum Beispiel von sinusförmigen Störern, wie Energiesparlampen oder andere Fremdlichtquellen, zu verringern.

Welche der Fotodioden der Fotodiodenzeile 18 auf diese Weise oder auf das oben mit Bezug zu Fig. 3 beschriebene Auswerteverfahren ausgewertet werden, hängt davon ab, an welcher Stelle der Schaltabstand gewählt wird und mit welcher Genauigkeit die Lage der reflektierten Objekte im Bereich des Schaltabstandes bestimmt werden soll.

Das erfindungsgemäße Verfahren und die erfindungsgemäße Vorrichtung ermöglichen es, dass ein und dieselbe Vorrichtung und Auswerteeinrichtung mit unterschiedlichen Schaltabständen und gewünschter Genauigkeit betrieben werden können. Die jeweiligen Parameter werden in einem Einlernvorgang festgelegt. Insbesondere kann in diesem Einlernvorgang festgelegt werden, in welchem Bereich eine Auswertung ähnlich der in Fig. 3 beschriebenen Auswertung stattfindet. Außerdem kann durch die Festlegung der Multiplikationsfaktoren und der Größe und Lage der Unterintegrationsfenster frei festgelegt werden, wo der Schaltabstand sein soll.

### Bezugszeichenliste

- 10: Gehäuse
- 12: Lichtquelle
- 14: Sendeoptik
- 16: Empfangsoptik
- 18: Fotodiodenzeile
- 20: Fotodiode
- 26: Sendelicht
- 32, 42, 52, 56: Objekt
- 34, 44, 54, 58: reflektiertes Licht
- 62: erstes Unterintegrationsfenster
- 64: zweites Unterintegrationsfenster
- 100: Auswerteschaltung
- 101, 102: Schalter
- 103, 104: Integratoren
- 105: Addierer
- 106: Tiefpass
- 107: steuerbare Stromquelle
- 300: Objektfeststellungssensor
- 310, 312: Überwachungsbereich
- 320, 322: Schaltabstand
- SP: Sendepuls
- EP: Empfangspuls
- IF: Integrationsfenster
- I1, I2, I3: Integrationsfenster

## Patentansprüche

1. Objektfeststellungsverfahren zur Feststellung, ob sich ein Objekt innerhalb eines Überwachungsbereiches (310, 312) befindet, der zumindest auf einer Seite durch einen wählbaren Schaltabstand (320, 322) begrenzt ist, bei dem
a) ein Lichtpuls einer vorbestimmten Pulsdauer Tw in den Überwachungsbereich (310, 312) geschickt wird,
b) der gegebenenfalls an einem Objekt reflektierte Lichtpuls mit zumindest einer Zeile (18) von fotosensitiven Elementen (20) detektiert wird, wobei der Auftreffpunkt des reflektierten Lichtpulses bezüglich der Zeile von fotosensitiven Elementen (20) vom Abstand des Objekts abhängt,
c) zumindest für dasjenige fotosensitive Element, das einen reflektierten Lichtpuls empfängt, wenn ein Objekt sich etwa im Schaltabstand (320, 322) befindet, das detektierte Signal über ein zeitliches Integrationsfenster (60) integriert wird, das zwei zeitlich aufeinander folgende Unterintegrationsfenster (62, 64) umfasst,
wobei das Integrationsfenster (60) in einem vorgeschalteten Einlernschritt so festgelegt wird, dass es (i) länger als die Pulsdauer Tw ist, (ii) ein an einem Objekt reflektierter Lichtpuls zeitlich vollständig in dem Integrationsfenster liegt, und (iii) zumindest wenn es sich bei dem den Lichtpuls empfangenden fotosensitiven Element (20) um ein fotosensitives Element handelt, das einen Lichtpuls empfängt, wenn sich ein Objekt in einem festgelegten Fernbereich befindet, die Grenze zwischen den Unterintegrationsfenstern (62, 64) an einem Zeitpunkt Tx liegt, der der Summe aus der erwarteten Lichtpulslaufzeit Tp und der halben Lichtpulsdauer entspricht,
d) und das über das erste Unterintegrationsfenster (62) aufintegrierte Signal und das über das zweite Unterintegrationsfenster (64) aufintegrierte Signal mit einem ersten beziehungsweise zweiten Unterintegrationsfensterfaktor multipliziert und zu einem Summenintegrationssignal addiert werden,
wobei der erste Unterintegrationsfensterfaktor und der zweite Unterintegrationsfensterfaktor derart gewählt sind, dass das Produkt aus dem ersten Unterintegrationsfensterfaktor und der Länge des ersten Unterintegrationsfensters (62) gleich dem negativen Produkt des zweiten Unterintegrationsfensterfaktors und der Länge des zweiten Unterintegrationsfensters (64) ist.

2. Objektfeststellungsverfahren nach Anspruch 1, bei dem das erste und das zweite Unterintegrationsfenster (62, 64) gleich lang sind und der zweite Unterintegrationsfensterfaktor dem negativen Wert des ersten Unterintegrationsfensterfaktors entspricht.

3. Objektfeststellungsverfahren nach einem der Ansprüche 1 oder 2, bei dem der erste und/ oder der zweite Unterintegrationsfensterfaktor den Betrag 1 haben.

4. Objektfeststellungsverfahren nach einem der Ansprüche 1 bis 3, bei dem vor der Bildung des Summenintegrationssignales mehrere Lichtpulse in den Überwachungsbereich (310, 312) geschickt werden und gegebenenfalls reflektierte Empfangslichtpulse aufintegriert werden.

5. Objektfeststellungsverfahren nach einem der Ansprüche 1 bis 4, bei dem, wenn es sich bei dem den Lichtpuls empfangenden fotosensitiven Element (20) um ein solches fotosensitives Element handelt, das einen reflektierten Lichtpuls empfängt, wenn sich ein Objekt in einem Nahbereich befindet, das Integrationsfenster (60) in dem vorgeschalteten Einlernschritt so festgelegt wird, dass ein reflektierter Lichtpuls vollständig in einem der Unterintegrationsfenster (62, 64) liegt.

6. Objektfeststellungsverfahren nach einem der Ansprüche 1 bis 5, bei dem das zu jedem fotosensitiven Element (20) gehörige Summenintegrationssignal mit einem vorbestimmten Referenzwert verglichen wird.

7. Objektfeststellungsverfahren nach einem der Ansprüche 1 bis 6, bei dem das zu jedem fotosensitiven Element (20) gehörige Summenintegrationssignal mit einem individuellen, festgelegten Elementmultiplikationsfaktor multipliziert wird, die multiplizierten Signale addiert werden und die Summe mit einem vorbestimmten Summenreferenzwert verglichen wird.

8. Objektfeststellungsverfahren nach Anspruch 7, bei dem
- der Elementmultiplikationsfaktor für Signale von fotosensitiven Elementen, auf die der reflektierte Lichtpuls fällt, wenn sich das Objekt näher als der gewählte Schaltabstand zum Sensor befindet, einen ersten Wert a hat,
- der Elementmultiplikationsfaktor für Signale von fotosensitiven Elementen, auf die der reflektierte Lichtpuls fällt, wenn sich das Objekt weiter weg als der gewählte Schaltabstand befindet, einen zweiten Wert b hat, wobei b = - a gilt,
- der Elementmultiplikationsfaktor für Signale von fotosensitiven Elementen, auf die der reflektierte Lichtpuls fällt, wenn sich das reflektierende Objekt im Grenzbereich vor oder hinter oder an dem Schaltabstand befindet, einen Wert c hat, wobei c einen Wert zwischen a und b hat.

9. Objektfeststellungsverfahren nach Anspruch 8, bei dem a = 1 gewählt wird.

10. Objektfeststellungsverfahren nach einem der Ansprüche 8 oder 9, bei dem der Elementmultiplikationsfaktor für Signale von fotosensitiven Elementen, auf die der reflektierte Lichtpuls fällt, wenn sich das Objekt außerhalb eines gewünschten Sichtbereiches befindet, den Wert null hat.

11. Objektfeststellungsverfahren nach einem der Ansprüche 1 bis 10, bei dem jedes fotosensitive Element (20) mit einer Auswerteschaltung (100) verbunden ist, die insbesondere zur Durchführung der Schritte c) und d) ausgestaltet ist.

12. Objektfeststellungsverfahren nach Anspruch 11, bei dem die Anzahl der Auswerteschaltungen (100) kleiner als die Anzahl der fotosensitiven Elemente (20) ist und zur Auswertung die einzelnen fotosensitiven Elemente (20) über eine Schaltermatrix mit einer Auswerteschaltung (100) verbunden werden.

13. Objektfeststellungssensor zur Feststellung, ob sich ein Objekt innerhalb eines Überwachungsbereiches (310, 312) befindet, der zumindest auf einer Seite durch einen wählbaren Schaltabstand (320, 322) begrenzt ist, mit
- einer Lichtquelle zur Aussendung von Lichtpulsen in den Überwachungsbereich (310, 312),
- einer Zeile (18) von fotosensitiven Elementen (20) zum Empfang von aus dem Überwachungsbereich reflektierten Lichtpulsen, wobei der Auftreffpunkt der reflektierten Lichtpulse bezüglich der Zeile von fotosensitiven Elementen (20) vom Abstand des Objekts abhängt,
- einer Auswerteeinheit zur Auswertung der Ausgangssignale der fotosensitiven Elemente, die zur Durchführung der Schritte c) und d) eines Verfahrens nach einem der Ansprüche 1 bis 12 ausgestaltet ist.

14. Objektfeststellungssensor nach Anspruch 13, bei dem die Auswerteeinheit eine Anzahl von Auswerteschaltungen (100) umfasst, die der Anzahl von fotosensitiven Elementen (20) entspricht.

15. Objektfeststellungssensor nach Anspruch 13, bei dem die Auswerteeinheit eine Anzahl von Auswerteschaltungen (100), die kleiner als die Anzahl von fotosensitiven Elementen (20) ist, und eine Schaltermatrix zur wechselbaren Verbindung der fotosensitiven Elemente mit einer Auswerteschaltung (100) umfasst.

## Claims

1. An object determination method for the determination of whether an object is present within a monitored zone (310, 312) which is bound at at least one side by a selectable switching distance (320, 322), in which
a) a light pulse of a predetermined pulse duration Tw is transmitted into the monitored zone (310, 312);
b) the light pulse possibly reflected at an object is detected with at least one row (18) of photosensitive elements (20), wherein the point of incidence of the reflected light pulse, with respect to the row of photosensitive elements (20), depends on the distance of the object;
c) the detected signal is integrated over a time integration window (60) which includes two sub integration windows (62, 64) subsequent in time at least for that photosensitive element which receives a reflected light pulse when an object is approximately within the switching distance (320, 322), wherein the integration window (60) is determined in a previous learning step such that it is (i) longer than the pulse duration Tw, (ii) a light pulse reflected at an object lies completely within the integration window in time, and (iii) at least when the photosensitive element (20) receiving the light pulse is a photosensitive element which receives a light pulse when an object is present in a predetermined far region, the boundary between the sub integration windows (62, 64) lies at a point in time Tx which corresponds to the sum of the expected light pulse propagation time Tp and half of the light pulse duration,
d) and the signal integrated over the first sub integration window (62) and the signal integrated over the second sub integration window (64) is multiplied by a first sub integration window factor or a second sub integration window respectively and are added to a sum integration signal,
wherein the first sub integration window factor and the second sub integration window are selected such that the product from the first sub integration window factor and the length of the first sub integration window (62) is the same as the negative product of the second sub integration window factor and the length of the second sub integration window (64).

2. An object determination method in accordance with claim 1, in which the first and the second sub integration windows (62, 64) are of equal length and the second sub integration factor corresponds to the negative value of the first sub integration factor.

3. An object determination method in accordance with claim 1 or claim 2, in which the first and/or the second sub integration window factor has the value 1.

4. An object determination method in accordance with any one of the claims 1 to 3, in which, prior to the formation of the sum integration signal, a plurality of light pulses are transmitted into the monitored zone (310, 312) and reflected received light pulses are possibly integrated.

5. An object determination method in accordance with any one of the claims 1 to 4, in which, when the photosensitive element (20) receiving the light pulse is a photosensitive element which receives a light pulse when an object is present in a predetermined close region, the integration window (60) is determined in the previous learning step such that a reflected light pulse lies completely within one of the sub integration windows (62, 64).

6. An object determination method in accordance with any one of the claims 1 to 5, in which the sum integration signal associated with each photosensitive element (20) is compared to a predetermined reference value.

7. An object determination method in accordance with any one of the claims 1 to 6, in which the sum integration signal associated with each photosensitive element (20) is multiplied by an individual, determined element multiplication factor, the multiplied signals are added and the sum is compared to a predetermined sum reference value.

8. An object determination method in accordance with claim 7, in which
- the element multiplication factor for signals of photosensitive elements on which the reflected light pulse is incident has a first value of a when the object is closer than the selected switching distance to the sensor,
- the element multiplication factor for signals of photosensitive elements on which the reflected light pulse is incident has a second value of b when the object is further away than the selected switching distance, wherein b = - a,
- the element multiplication factor for signals of photosensitive elements on which the reflected light pulse is incident has a value of c when the reflecting object is present in the boundary region in front of or behind or at the switching distance, wherein c has a value between a and b.

9. An object determination method in accordance with claim 8, in which a = 1 is selected.

10. An object determination method in accordance with one of the claims 8 or 9, in which the element multiplication factor for signals of photosensitive elements on which the reflected light pulse is incident has a value of zero when the object is present outside of a desired viewing range.

11. An object determination method in accordance with any one of the claims 1 to 10, in which each photosensitive element (20) is connected to an evaluation circuit (100), which is in particular configured for carrying out the steps c) and d).

12. An object determination method in accordance with claim 11, in which the number of evaluation circuits (100) is smaller than the number of photosensitive elements (20) and of the individual photosensitive elements (20) are connected to an evaluation circuit (100) via a switching matrix for the evaluation .

13. An object determination sensor for the determination of whether an object is present within a monitored zone (310, 312) which is bounded at at least one side by a selectable switching distance (320, 322), having:
- a light source for the transmission of light pulses into the monitored zone (310, 312);
- a row (18) of photosensitive elements (20) for receiving reflected light pulses from the monitored zone, wherein the point of incidence of the reflected light pulse with respect to the row of photosensitive elements (20) depends on the distance of the object
- an evaluation unit for the evaluation of the output signals of the photosensitive elements which are configured for carrying out the steps c) and d) of a method in accordance with any one of the claims 1 to 12.

14. An object determination sensor in accordance with claim 13, in which the evaluation unit includes a number of evaluation circuits (100) which corresponds to the number of photosensitive elements (20).

15. An object determination sensor in accordance with claim 13, in which the evaluation unit includes a number of evaluation circuits (100) which is smaller than the number of photosensitive elements (20), and a switching matrix for the interchangeable connection of the photosensitive elements to an evaluation circuit (100).

## Revendications

1. Procédé de constatation d'objet pour constater si un objet se trouve à l'intérieur d'une zone surveillée (310, 312) qui est limitée au moins sur un côté par une distance de commutation (320, 322) susceptible d'être choisie, dans lequel
a) on envoie une impulsion lumineuse avec une durée d'impulsion prédéterminée Tw dans la zone surveillée (310, 312),
b) l'impulsion lumineuse éventuellement réfléchie sur un objet est détectée par au moins une ligne (18) d'éléments photosensibles (20), le point d'incidence de l'impulsion lumineuse réfléchie par rapport à la ligne d'éléments photosensibles (20) dépendant de la distance de l'objet,
c) au moins pour celui des éléments photosensibles qui reçoit une impulsion lumineuse réfléchie, quand un objet se trouve approximativement à la distance de commutation (320, 322), le signal détecté est intégré sur une fenêtre d'intégration temporelle (60) qui comprend deux fenêtres d'intégration partielles (62, 64) mutuellement successives,
dans lequel la fenêtre d'intégration (60) est déterminée, lors d'une étape d'apprentissage préalable, de telle façon que (i) elle est plus longue que la durée d'impulsion Tw, (ii) une impulsion lumineuse réfléchie sur un objet se trouve temporellement entièrement dans la fenêtre d'intégration, et (iii) au moins quand l'élément photosensible (20) qui reçoit l'impulsion lumineuse est un élément photosensible qui reçoit une impulsion lumineuse quand un objet se trouve dans une zone lointaine déterminée, la limite entre les fenêtres d'intégration partielles (62, 64) se trouve à un instant Tx qui correspond à la somme de la durée de propagation Tp attendue pour l'impulsion lumineuse et la moitié de la durée de l'impulsion lumineuse,
d) le signal intégré sur la première fenêtre d'intégration partielle (62) et le signal intégré sur la seconde fenêtre d'intégration partielle (64) sont multipliés avec un premier facteur de fenêtre d'intégration partielle et avec un second facteur de fenêtre d'intégration partielle et sont additionnés pour donner un signal d'intégration somme,
dans lequel le premier facteur de fenêtre d'intégration partielle et le second facteur de fenêtre d'intégration partielle sont choisis de telle manière que le produit du premier facteur de fenêtre d'intégration partielle par la longueur de la première fenêtre d'intégration partielle (62) est égale au produit négatif du second facteur de fenêtre d'intégration partielle par la longueur de la seconde fenêtre d'intégration partielle (64).

2. Procédé de constatation d'objet selon la revendication 1, dans lequel la première et la seconde fenêtre d'intégration partielle (62, 64) ont la même longueur, et le second facteur de fenêtre d'intégration partielle correspond à la valeur négative du premier facteur de fenêtre d'intégration partielle.

3. Procédé de constatation d'objet selon l'une des revendications 1 ou 2, dans lequel le premier et/ou le second facteur de fenêtre d'intégration partielle ont la valeur 1.

4. Procédé de constatation d'objet selon l'une des revendications 1 à 3, dans lequel, avant la formation du signal d'intégration de somme, on envoie plusieurs impulsions lumineuses dans la zone surveillée (310,312) et l'on intègre les impulsions lumineuses reçues éventuellement réfléchies.

5. Procédé de constatation d'objet selon l'une des revendications 1 à 4, dans lequel, lorsque l'élément photosensible (20) qui reçoit l'impulsion lumineuse est un élément photosensible qui reçoit une impulsion lumineuse réfléchie si un objet se trouve dans une zone proche, la fenêtre d'intégration (60) est déterminée, dans l'étape d'apprentissage préalable, de telle façon qu'une impulsion lumineuse réfléchie se trouve totalement dans l'une des fenêtres d'intégration partielle (62, 64).

6. Procédé de constatation d'objet selon l'une des revendications 1 à 5, dans lequel le signal d'intégration somme appartenant à chaque élément photosensible (20) est comparé à une valeur de référence prédéterminée.

7. Procédé de constatation d'objet selon l'une des revendications 1 à 6, dans lequel le signal d'intégration somme appartenant à chaque élément photosensible (20) est multiplié avec un facteur de multiplication élémentaire individuel fixé, les signaux multipliés sont additionnés et la somme est comparée à une valeur de référence somme prédéterminée.

8. Procédé de constatation d'objet selon la revendication 7, dans lequel
- le facteur de multiplication élémentaire, pour des signaux provenant d'éléments photosensibles sur lesquels tombe l'impulsion lumineuse réfléchie si l'objet se trouve plus proche du capteur que la distance de commutation choisie, a une première valeur a,
- le facteur de multiplication élémentaire, pour des signaux provenant d'éléments photosensibles sur lesquels tombe l'impulsion lumineuse si l'objet se trouve plus loin que la distance de commutation choisie, a une seconde valeur b, telle que b = - a,
- le facteur de multiplication élémentaire, pour des signaux provenant d'éléments photosensibles sur lesquels tombe l'impulsion lumineuse réfléchie si l'objet réfléchissant se trouve dans la zone frontière devant ou derrière ou au niveau de la distance de commutation, a une valeur c, telle que c a une valeur comprise entre a et b.

9. Procédé de constatation d'objet selon la revendication 8, dans lequel a est choisi égal à 1.

10. Procédé de constatation d'objet selon l'une des revendications 8 ou 9, dans lequel le facteur de multiplication élémentaire, pour des signaux revenant d'éléments photosensibles sur lesquels tombe l'impulsion lumineuse réfléchie si l'objet se trouve à l'extérieur d'une zone de vision souhaitée, a une valeur nulle.

11. Procédé de constatation d'objet selon l'une des revendications 1 à 10, dans lequel chaque élément photosensible (20) est relié à un circuit d'évaluation (100), qui est en particulier conçu pour mettre en oeuvre les étapes c) et d).

12. Procédé de constatation d'objet selon la revendication 11, dans lequel le nombre de circuits d'évaluation (100) est inférieur au nombre des éléments photosensibles (20) et, pour l'évaluation, les éléments photosensibles individuels (20) sont connectés à un circuit d'évaluation (100) via une matrice de commutation.

13. Capteur de constatation d'objet, pour constater si un objet se trouve à l'intérieur d'une zone surveillée (310, 312) qui est limitée sur au moins un côté par une distance de commutation (320, 322) susceptible d'être choisie, comprenant
- une source lumineuse pour émettre des impulsions lumineuses dans la zone surveillée (310, 312),
- une ligne (18) d'éléments photosensibles (20) pour recevoir des impulsions lumineuses réfléchies provenant de la zone surveillée, telle que le point d'incidence des impulsions lumineuses réfléchies par rapport à la ligne d'éléments photosensibles (20) dépend de la distance de l'objet,
- une unité d'évaluation pour évaluer les signaux de sortie des éléments photosensibles, qui est conçue pour mettre en oeuvre les étapes c) et d) d'un procédé selon l'une des revendications 1 à 12.

14. Capteur de constatation d'objets selon la revendication 13, dans lequel l'unité d'évaluation comprend un nombre de circuits d'évaluation (100) qui correspond au nombre d'éléments photosensibles (20).

15. Capteur de constatation d'objet selon la revendication 13, dans lequel l'unité d'évaluation comprend un nombre de circuits d'évaluation (100) qui est inférieur au nombre d'éléments photosensibles (20), et comprend une matrice de commutation pour la connexion en alternance des éléments photosensibles avec un circuit d'évaluation (100).
